# EUROPEAN PATENT APPLICATION

(11) **EP 1 128 511 A1**
(43) Date of publication of application: **29.08.2001**
(21) Application number: 00128702.8
(22) Date of filing: 29.12.2000
(51) Int. Cl.: H02G 1/00

(54) **Supporting device for positioning embeddable boxes**

(30) Priority: 24.02.2000 IT PS000008 U
(71) Applicant: Patrignani, Fabrizio, 61100 Pesaro (IT)
(72) Inventor: Patrignani, Fabrizio, 61100 Pesaro (IT); Patrignani, Duilio, 61100 Pesaro (IT)
(74) Representative: Negrini, Elena

(57) **Abstract**

A supporting device for positioning embeddable boxes (8) into a wall (10) includes a support rod (2), having a plurality of joint (1) slidably and lockably mounted thereto, each joint (1) supporting an arm (5) being at right angle with respect to the rod (2) and having a plurality of openings (6) for the removable connection of fixing means (7) fit to fix the boxes (8) to the arms (5).

The connection of the fixing means (7) to the opening (6) and the sliding of the joints (1) along the rod (2) allow the positioning of the boxes (8) on the wall (10) and the locking of the joints (1) preventing shifts of the boxes (8) from the respective positions.

## Description

The present invention relates to the devices for installing embeddable boxes in recesses carried out in walls, columns and the like.

Particularly the present invention refers to a supporting device for positioning embeddable boxes, especially for electric applications, and for fixing said boxes using materials such as cement, mortar or plastic foam.

Traditional mounting tools are known such as meter, spirit level and plumb line.

The main drawback of the known means consists in the fact that they must be used by expert and skilled workers and they require a lot of time for their installation. Consequently said known means cause high assembly costs.

A further drawback of the known means is the high risk of the box misplacement.

The main objects of the present invention is to propose a device to make easier, faster and more precise the mounting of the embeddable boxes in walls, columns and the like, both rough and finished.

A further object is to propose a device for a low cost mounting.

The invention is now described in detail referring to the enclosed drawings in which:
- figure 1 shows a front view of the supporting device with three boxes in an operating condition on a wall;
- figure 2 shows an enlarged front view of the supporting device of figure 1;
- figure 3 shows an plan sectional view of the device of figure 2.

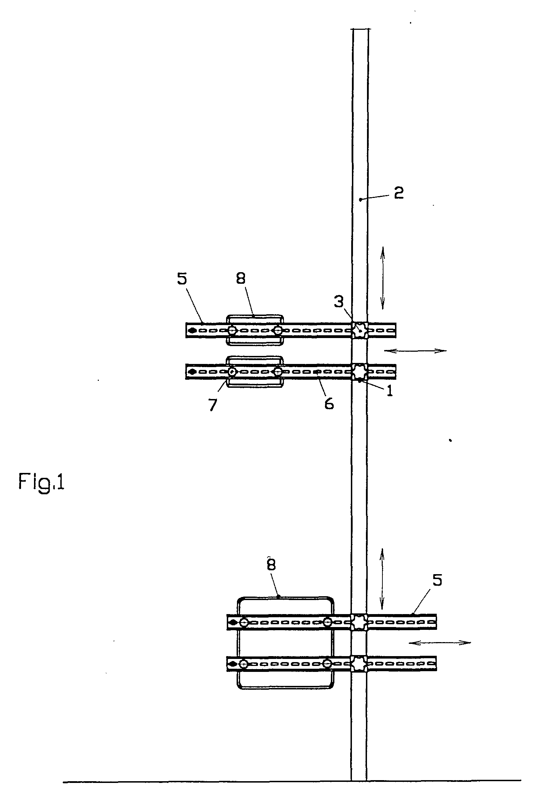

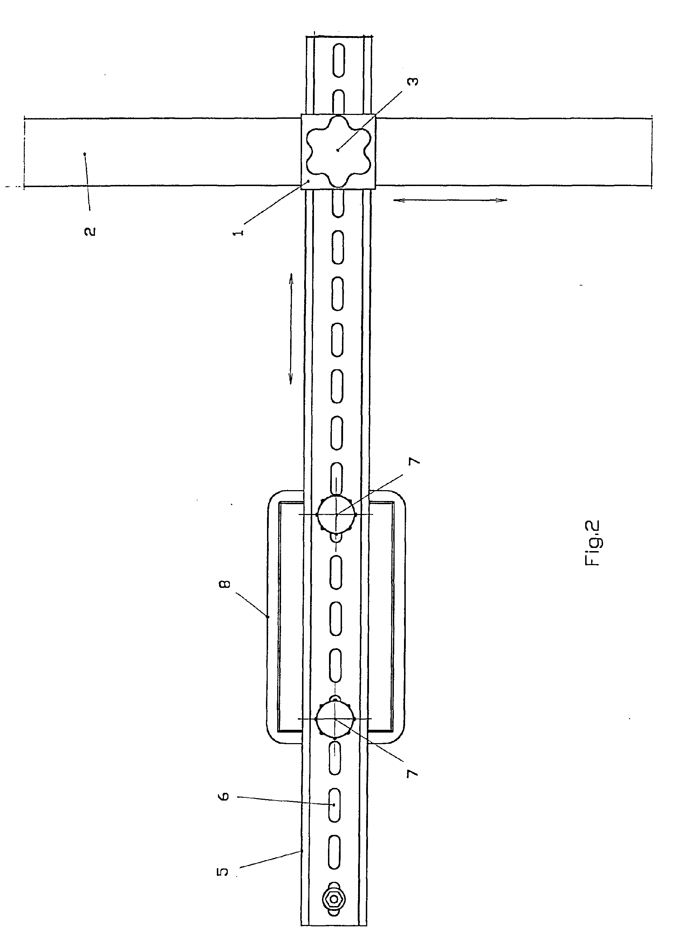

With reference to figures 1-3, numeral 1 indicates a joint sliding along a rod 2 and lockable by means of screw means 3. The rod 2 is, for instance, telescopically extendible and provided with an inner spring causing the repulsion of the ends of the rod 2 or it is extendable by means of screw to be easily lockable between a floor and a ceiling or between two walls. The joint 1 includes a guide 4 slidingly supporting an arm 5.

Said arm 5 has a series of openings 6 consisting, for instance, of longitudinal slots or round holes. The boxes are fixed to the arms 5 through fixing means 7 consisting, for instance, of screw knobs. The fixing can be done inserting the threaded studs of the fixing means 7 into the opening 6 and screwing the studs into the holes of the box 8. Said box holes are provided in order to fix thereto the electrical part or the box cover.

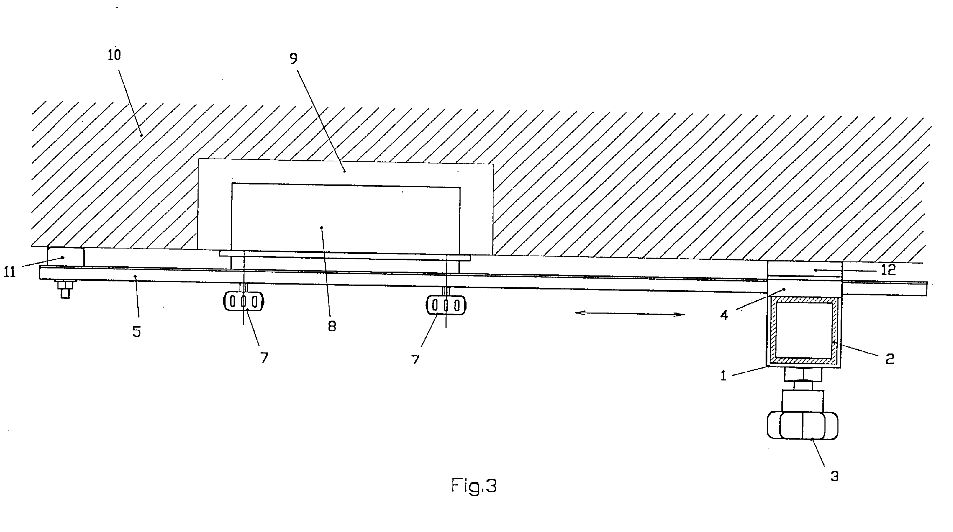

The possibility to slide the joint 1 along the rod 2 and to use any couple of openings, allows to locate precisely the box 8 at a preset position, particularly into the recess 9, carried out in the wall 10. The possibility to slide the arm 5 into the guide 4 of the joint 1, makes easier said positioning. In order to insert the box at the correct depth, shims 11 and 12, respectively at an end of the arm 5 and on the joint 1, are provided and, as shown in figure 3, keep the arm 5 and the box 8, supported by said arm, detached from the wall 10. The settable dimensions of the shims 11, 12 allow to locate the boxes 8 with the related openings at same level of the wall 10 surface or at same level of the coating surface, for instance plaster, to be applied after the box fixing.

For instance, as shown in figure 1, more arms can be applied on the vertical rod 2.

The operation includes the horizontal or, preferably, vertical fixing of the rod 2 and the positioning of the arm 5 at the same level of the recess 9, sliding the joint 1 along the rod 2. The shim 12 of the joint 1 is in contact with the wall 10 surface, while the screw means 3 lock the joint 1 in the correct position.

Afterwards the box 8, inside the related recess 9, can be fixed to the arm 5, using the fixing means 7, through the opening 6.

In this way the box position is preset with precision in the three dimensions and kept stable for the whole necessary time for the cement setting. Obviously the operating sequence can be reversed or modified. The device is removed from the boxes 8 when the cement has hardened.

Furthermore the arm 5 can be fixed to the joint 1 by hinged means, known and not shown, in order to allow a momentary shifting of the arm from the wall, during the box fixing, without moving the vertical rod 2.

Moreover the fixing means 7 may consist of jaws, known and not shown, matching by elastic or screw means, the internal lateral surfaces of the boxes 8.

The joint 1, besides, can be dismountable, in a way known and not shown, in order to be laterally insertable on a rod 2 already fixed.

Furthermore the supporting device may include elements making easier the working and the positioning, such as spirit levels and graduated rods, known and not shown, applied to the rod 2 and to the arms 5

## Claims

1. Supporting device for positioning embeddable boxes (8) into a wall (10) characterized in that includes at least a support rod (2), having a plurality of joint (1) slidably and lockably mounted thereto, each joint (1) supporting an arm (5) being at right angle with respect to the rod (2) and having a plurality of openings (6) for the removable connection of fixing means (7) fit to fix the boxes (8) to the arms (5); with the connection of the fixing means (7) to the opening (6) and the sliding of the joints (1) along the rod (2) allowing the positioning of the boxes (8) on the wall (10) and the locking of the joints (1) preventing shifts of the boxes (8) from the respective positions.

2. Supporting device according to claim 1 characterized in that the arms (5) and the joint (1) have shims (11, 12) in order to space out with a preset distance the arms (5) from the wall (10) surface.

3. Supporting device according to any of the preceding claims characterized in that the fixing means (7) consist of screw knobs whose threaded studs, crossing the openings (6), fit holes of the boxes (8).

4. Supporting device according to claim 1 or claim 2 characterized in that the fixing means (7) consist of jaws for matching the internal lateral surfaces of the boxes (8).

5. Supporting device according to any of the preceding claims characterized in that each joint (1) includes a guide (4) for slidably supporting the related arm (5).

6. Supporting device according to any of the preceding claims characterized in that each joint (1) includes a hinged means for rotatably supporting the related arm (5).

7. Supporting device according to any of the preceding claims characterized in that the joint (1) could be decomposable, in order to be laterally insertable on a rod already fixed.

8. Supporting device according to any of the preceding claims characterized in that the rod (2) and/or the arms (5) include graduated levels and/or rods.

9. Supporting device according to any of the preceding claims characterized in that the joint (1) is lockable along the rod (2) by screw means (3).

10. Supporting device according to any of the preceding claims characterized in that the rod (2) can be extended telescopically or by means of screw.
